# DEMANDE DE BREVET EUROPEEN

(11) **EP 4 254 576 A1**
(43) Date de publication de la demande: **04.10.2023**
(21) Numéro de dépôt: 22305414.9
(22) Date de dépôt: 31.03.2022
(51) Int. Cl.: H01M 10/04, H01M 50/209, H01M 50/24, H01M 50/249, H01M 50/502

(54) **BATTERIE AVEC TRAVERSES ET CORNIÈRES POUR VÉHICULE ÉLECTRIQUE OU HYBRIDE, ET PROCÉDÉ D ASSEMBLAGE D'UNE TELLE BATTERIE**

(71) Demandeur: Automotive Cells Company SE, 92300 Levallois Perret (FR)
(72) Inventeur: CHAUVEAU, Pierre, 33520 BRUGES (FR); MATHIEU, Alexandre, 33300 BORDEAUX (FR); BRIEN, Patrick, 33290 PAREMPUYRE (FR); MARATHE, Dimitri, 33140 VILLENAVE D'ORNON (FR)
(74) Mandataire: Lavoix

(57) **Abrégé**

Batterie pour véhicule électrique ou hybride, comprenant :
- un boîtier (12) définissant un logement (14) s'étendant dans une direction longitudinale (X) et dans une direction transversale (Y), le boîtier comprenant un premier bord latéral (18),
- une pluralité de traverses (16) transversales,
- une pluralité d'ensembles comportant des cellules électrochimiques (24), les traverses et les ensembles étant disposés successivement dans le logement dans la direction longitudinale,
- une pluralité de cornières (28) pour transmettre des efforts transversaux entre les traverses et le boîtier, au moins certaines des cornières comprenant une première partie (92) s'étendant perpendiculairement à la direction transversale et fixée sur une extrémité transversale d'au moins certaines des traverses, et une deuxième partie (94) s'étendant transversalement à partir la première partie et étant fixée sur le premier bord latéral, les ensembles, la première partie, et le premier bord latéral définissant au moins partiellement un logement (96) s'étendant longitudinalement.

## Description

La présente invention concerne une batterie électrique.

L'invention concerne également un procédé d'assemblage des éléments d'une telle batterie.

L'invention s'applique en particulier à la réalisation d'une batterie, notamment pour véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres, et un empilement d'électrodes négatives reliées les unes aux autres, séparées par un séparateur, connus sous le terme de « stack ». Les électrodes positives reliées les unes aux autres forment une borne positive, et les électrodes négatives reliées les unes aux autres forment une borne négative.

La batterie comporte en général un boîtier participant à la protection de ses éléments internes, notamment les cellules et les connecteurs. Afin de permettre à la batterie de résister à des chocs, par exemple latéraux, éventuellement subis par le véhicule, le boîtier inclut en général des traverses fixes s'étendant entre deux bords latéraux du boîtier opposés l'un à l'autre selon une direction transversale, par exemple celle du véhicule. Le boîtier prédéfinit ainsi des compartiments dans lesquels sont ensuite placés les modules.

Toutefois, les connexions électriques entre les modules enjambent en général les traverses. Ceci a pour effet de laisser dans le boîtier un espace au-dessus des cellules électrochimiques, du côté opposé au fond du boîtier. Ceci impacte négativement la compacité de la batterie et sa densité énergétique, par exemple exprimée en W.h/L (watt.heure par litre).

Un but de l'invention est donc de fournir une batterie présentant une meilleure densité énergétique, tout en résistant suffisamment aux choc latéraux éventuellement subis par le véhicule.

A cet effet, l'invention a pour objet une batterie pour véhicule électrique ou hybride, la batterie comprenant :
- un boîtier définissant un logement s'étendant dans une direction longitudinale et dans une direction transversale perpendiculaire à la direction longitudinale, le boîtier comprenant un premier bord latéral et un deuxième bord latéral opposés l'un à l'autre transversalement,
- une pluralité de traverses s'étendant dans la direction transversale, chacune des traverses comprenant deux extrémités transversales opposées l'une à l'autre,
- une pluralité d'ensembles, chacun des ensembles comportant des cellules électrochimiques s'étendant successivement dans la direction transversale et solidarisées entre elles, les traverses et les ensembles étant disposés successivement dans le logement dans la direction longitudinale, et
- une pluralité de cornières adaptées pour transmettre des efforts transversaux entre les traverses et le boîtier, au moins certaines des cornières comprenant une première partie s'étendant perpendiculairement à la direction transversale et fixée sur l'une des extrémités transversales d'au moins certaines des traverses, et une deuxième partie s'étendant transversalement à partir la première partie et étant fixée sur le premier bord latéral, les ensembles, la première partie, et le premier bord latéral définissant au moins partiellement un premier logement s'étendant longitudinalement.

Selon des modes particuliers de réalisation, la batterie comprend l'une ou plusieurs des caractéristiques suivantes, prise(s) isolément ou selon toutes les combinaisons techniquement possibles :
- au moins certaines des cornières comprennent une première partie s'étendant perpendiculairement à la direction transversale et fixée sur l'autre des extrémités transversales d'au moins certaines des traverses, et une deuxième partie s'étendant transversalement à partir la première partie et étant fixée sur le deuxième bord latéral, les ensembles, la première partie, et le deuxième bord latéral définissant au moins partiellement un deuxième logement s'étendant longitudinalement et adapté pour abriter un ou plusieurs connecteurs électriques de la batterie ;
- la deuxième partie définit au moins un orifice de fixation adapté pour recevoir une vis de la batterie, la deuxième partie étant en contact plan avec, et fixée par la vis sur un épaulement ou un rail longitudinal du boîtier ;
- le boîtier comprend un fond, la batterie comprenant en outre au moins un capot s'étendant selon la direction longitudinale et disposé transversalement entre le premier bord latéral et la première partie d'au moins certaines des cornières, le capot délimitant au moins partiellement le premier logement, le capot étant situé de l'autre côté de la deuxième partie de chacune desdites certaines des cornières par rapport au fond selon une troisième direction perpendiculaire à la direction longitudinale et la direction transversale ;
- le capot présente une section perpendiculairement à la direction longitudinale en forme de « L » ;
- les cornières comprennent une troisième partie s'étendant transversalement à partir la première partie du même côté que la deuxième partie, la troisième partie étant situé de l'autre côté de la deuxième partie par rapport au fond selon la troisième direction, le capot butant sur la deuxième partie et la troisième partie selon la troisième direction ;
- les traverses et les ensembles sont disposés dans la direction longitudinale les uns contre les autres, de sorte qu'il n'existe pas de jeu mécanique entre les traverses et les ensembles ;
- au moins certaines des traverses présentent, perpendiculairement à la direction transversale, une section en « T » ou en « H » ;
- chacun des ensembles comprend en outre : deux plaques latérales s'étendant perpendiculairement à la direction longitudinale et situées de part et d'autre des cellules électrochimiques longitudinalement : et au moins deux couches de colle ou deux couches d'un matériau souple situées longitudinalement entre les cellules électrochimiques et les deux plaques latérales respectivement ; et
- chacun des ensembles comprend en outre deux plaques extrémales s'étendant perpendiculairement à la direction transversale de part et d'autre des cellules électrochimiques transversalement, l'une des deux plaques extrémales de chacun des ensembles se situant transversalement de l'autre côté de la première partie d'une des cornières par rapport au premier bord latéral du boîtier.

L'invention a aussi pour objet un procédé d'assemblage d'une batterie telle que décrite ci-dessus, comprenant :
- un agencement des traverses et des ensembles dans une direction longitudinale de montage pour obtenir un système agencé dans lequel les traverses s'étendent dans une direction transversale de montage perpendiculaire à la direction longitudinale de montage, les cellules électrochimiques de chacun des ensembles s'étendant successivement dans la direction transversale de montage, les traverses et les ensembles étant disposés successivement dans la direction de serrage, et
- une fixation sur le boîtier des traverses et/ou des ensembles pour obtenir un système fixé, le système fixé étant situé dans le logement et orienté par rapport au boîtier de sorte que la direction longitudinale de montage soit parallèle à la direction longitudinale définie par la batterie à l'état assemblé, et que la direction transversale de montage soit parallèle à la direction transversale définie par la batterie à l'état assemblé, la deuxième partie d'au moins certaines des cornières étant fixée sur le premier bord latéral du boîtier.

Selon des modes particuliers de réalisation, le procédé comprend l'une ou plusieurs des caractéristiques suivantes, prise(s) isolément ou selon toutes les combinaisons techniquement possibles :
- l'agencement des traverses et des ensembles dans la direction longitudinale de montage comprend un serrage des traverses et des ensembles les uns contre les autres dans la direction longitudinale de montage ;
- le serrage des traverses et des ensembles les uns contre les autres est réalisé dans le logement, la direction longitudinale de montage étant parallèle à la direction longitudinale et la direction transversale de montage étant parallèle à la direction transversale pendant le serrage ; et
- le serrage des traverses et des ensembles les uns contre les autres est réalisé hors du logement, le système serré comprenant des tirants s'étendant dans la direction longitudinale de montage et des organes de serrage, les traverses et les ensembles étant enfilés sur les tirants, et les organes de serrage étant disposés sur les tirants pour comprimer les ensembles et les traverses dans la direction longitudinale de montage ; et la fixation sur le boîtier du système serré comprend un déplacement en bloc du système serré dans le logement.

L'invention sera mieux comprise à la lecture de la description qui va suivre, donnée uniquement à titre d'exemple et faite en se référant aux dessins annexés, sur lesquels :
- la figure 1 est une vue en perspective d'une batterie selon l'invention,
- la figure 2 est une vue en perspective de la batterie représentée sur la figure 1, certains des ensembles ayant été omis, et certaines cellules électrochimiques et connecteurs ayant été omis pour l'un des ensembles représentés,
- la figure 3 est une vue en perspective d'un des ensembles de la batterie représentée sur la figure 1,
- la figure 4 est une vue de la batterie représentée sur la figure 1, en coupe selon un plan perpendiculaire à la direction transversale,
- la figure 5 est une vue en perspective d'une partie de la batterie représentée sur la figure 1, le boîtier étant omis afin de mieux montrer les cornières, et
- la figure 6 est une vue en coupe d'une cornière de la batterie représentée sur la figure 1, en coupe selon un plan perpendiculaire à la direction longitudinale.

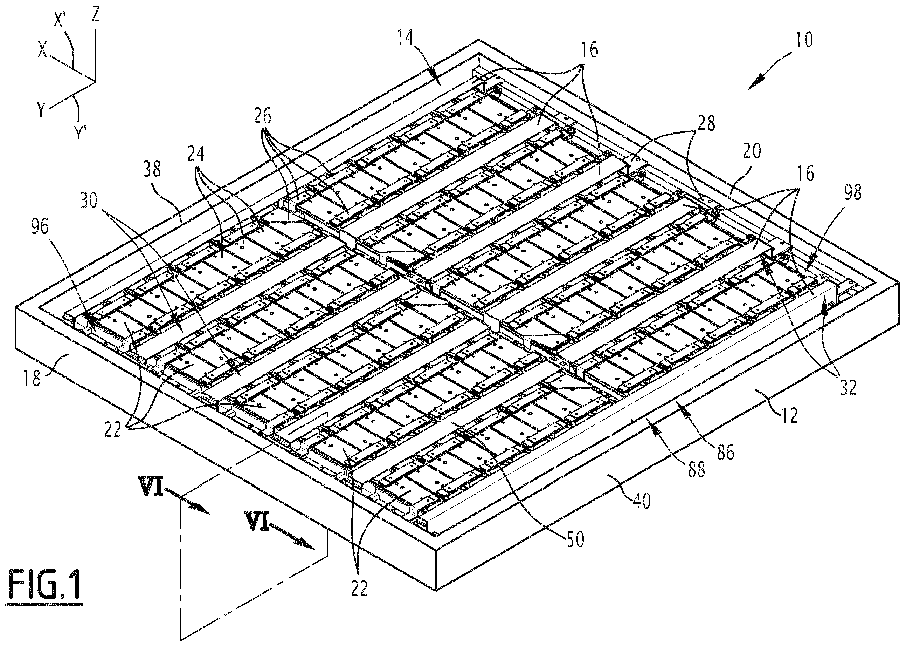

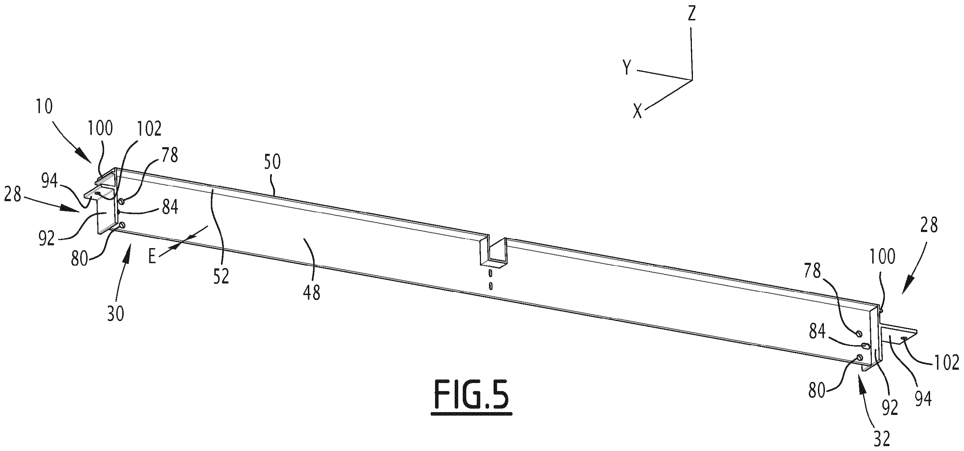

En référence aux figures 1 à 6, on décrit une batterie 10 selon l'invention.

La batterie 10 est par exemple destinée à prendre place dans un véhicule automobile électrique ou hybride (non représenté).

Comme visible sur la figure 1, la batterie 10 comprend un boîtier 12 définissant un logement 14 s'étendant dans une direction longitudinale X qui est par exemple la direction d'avancée du véhicule, et dans une direction transversale Y perpendiculaire à la direction longitudinale et qui est par exemple la direction transversale du véhicule.

Optionnellement, la batterie 10 comprend un couvercle, non représenté, pour fermer le boîtier 12.

En variante, la batterie 10 est sans couvercle et avantageusement montée en lien direct avec le plancher du véhicule. La batterie 10 est par exemple collée sur une surface inférieure du plancher.

On définit en outre une troisième direction Z perpendiculaire à la direction longitudinale X et à la direction transversale Y, et qui est par exemple destinée à être sensiblement verticale lorsque le véhicule se situe sur une surface horizontale (non représentée).

La batterie 10 comprend en outre une pluralité de traverses 16 s'étendant dans la direction transversale Y entre un premier bord latéral 18 et un deuxième bord latéral 20 du boîtier opposés l'un à l'autre transversalement. La batterie 10 comprend aussi une pluralité d'ensembles 22, chacun des ensembles comportant des cellules électrochimiques 24 s'étendant successivement dans la direction transversale Y et solidarisées mécaniquement entre elles.

La batterie 10 comprend aussi des connecteurs électriques 26 disposés dans les ensembles pour connecter les cellules électrochimiques 24 entre elles, et entre les ensembles 22 pour connecter les ensembles entre eux.

La batterie comprend en outre des cornières 28 fixées, par exemple soudées, sur deux extrémités transversales 30, 32 de chacune des traverses 16, et fixées sur le boîtier.

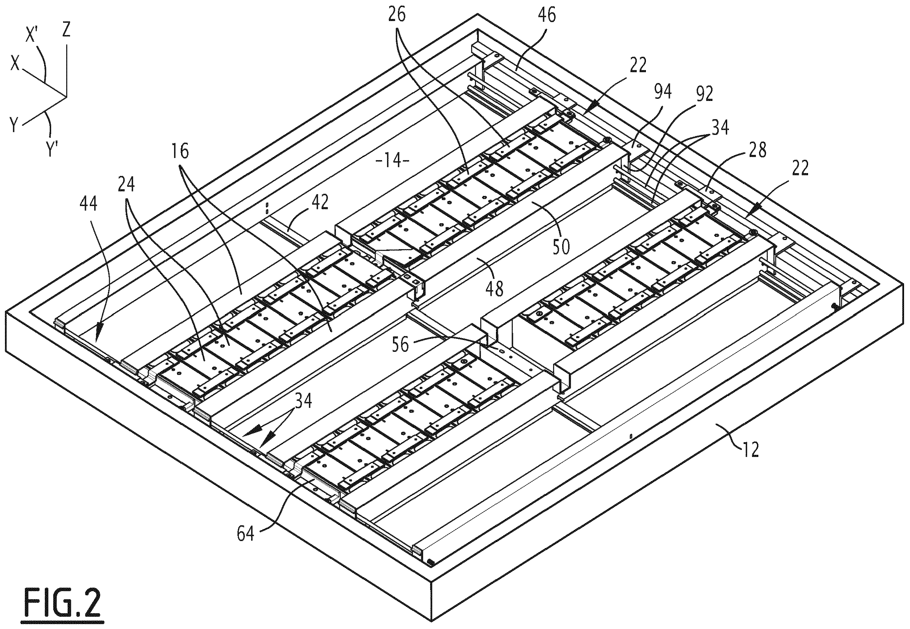

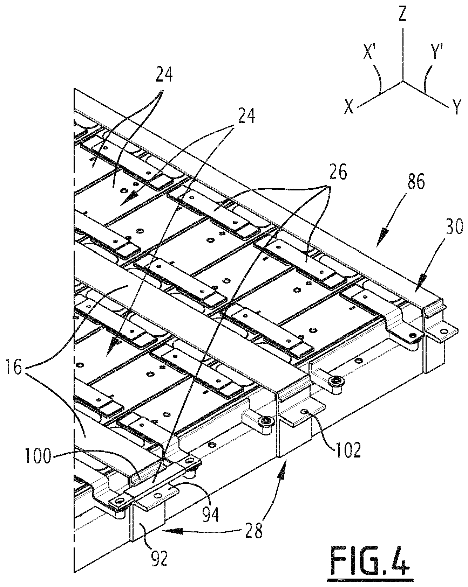

Selon un mode de réalisation particulier, la batterie 10 comprend en outre des tirants 34 (figures 2 et 4) longitudinaux dont le rôle dans l'assemblage de la batterie sera expliqué plus bas.

La batterie 10 comprend aussi des organes de fixation (non représentés), tels que des vis, pour fixer les ensembles 22 et les traverses 16 sur le boîtier 12.

Dans l'exemple, la batterie 10 comprend cinq ensembles 22 et six traverses 16. Quatre des six traverses 16 sont intercalées longitudinalement entre les ensembles 22, et deux traverses sont dites « extrémales » longitudinalement, car elles ne longent respectivement qu'un seul des ensembles.

Selon d'autres modes de réalisation non représentés, le nombre d'ensembles 22 est de moins de cinq ou de plus de cinq, et le nombre de traverses 16 est de moins de six ou de plus de six.

Selon une variante (non représentée), chacune des traverses 16 est située longitudinalement entre deux des ensembles 22. Le nombre des traverses 16 est alors égal au nombre des ensembles 22 moins un.

Le boîtier 12 présente par exemple une forme parallélépipédique, avantageusement aplatie dans la troisième direction Z, car la batterie est par exemple destinée à être intégrée en partie inférieure du véhicule, par exemple sous un habitacle.

Outre le premier bord latéral 18 et le deuxième bord latéral 20, le boîtier 12 comprend un fond 36, et un troisième bord latéral 38 et un quatrième bord latéral 40 opposés l'un à l'autre dans la direction longitudinale X.

Le boîtier 12 définit par exemple des rails longitudinaux 42, 44, 46 (Figure 2) adaptés pour faciliter un guidage des ensembles 22 et des traverses 16 lors d'un montage de la batterie 10, et pour servir de support de fixation aux ensembles et aux traverses.

Le rail 42 s'étend par exemple en saillie sur le fond 36.

Les rails 44, 46 s'étendent respectivement sur le premier bord latéral 18 et sur le deuxième bord latéral 20.

Les traverses 16 et les ensembles 22 sont disposés dans le logement 14 successivement dans la direction longitudinale X, par exemple de manière alternée. Les traverses 16 et les ensembles 22 sont avantageusement les uns contre les autres dans la direction longitudinale X, de sorte qu'il n'existe pas de jeu mécanique entre les traverses 16 et les ensembles 22, les ensembles et les traverses étant fixés sur le boîtier 12. Ainsi, les traverses 16 sont plus résistantes au flambement en cas de choc latéral (dans la direction transversale Y) sur le véhicule, car elles sont maintenues par les ensembles 22.

Les traverses sont rapportées sur le boîtier 12 lors de l'assemblage de la batterie 10. Ainsi le boîtier 12 et les traverses 16 ne prédéfinissent pas de compartiments dans lesquels les ensembles 22 seraient placés.

Dans l'exemple, les traverses 16 et les ensembles 22 forment une alternance simple (un ensemble 22 suivi d'une traverse 16 suivie d'un ensemble 22... etc).

Selon des variantes non représentée, l'alternance peut être plus complexe (par exemple deux ensembles 22 suivis d'une traverse 16 suivie de deux ensembles 22... etc).

Selon d'autres variantes encore, l'alternance peut être irrégulière (par exemple un ensemble 22 suivi d'une traverse 16 suivie de deux ensembles 22 suivis d'une traverse 16...).

Plus généralement, les traverses 16 peuvent séparer un ou deux ensembles 22, voire plus, ou se situer en position extrémale (i.e. avec un ensemble 22 seulement d'un côté).

En variante (non représentée), les traverses 16 et les ensembles 22 ne sont pas les uns contre les autres dans la direction longitudinale X, par exemple pour conserver un jeu mécanique entre les ensembles 22 et les traverses 16 lors de l'assemblage de la batterie 10.

Au moins certaines des traverses 16, dans l'exemple celles qui ne sont pas extrémales, présentent, perpendiculairement à la direction transversale Y, une section en « T » (figure 4).

Selon des variantes non représentées, la section est en « H », en « C », en « U », ou forme un rectangle (la traverse est alors tubulaire).

Dans l'exemple, les traverses 16 extrémales ont une section différente de celle des traverses non extrémales, par exemple en « C ».

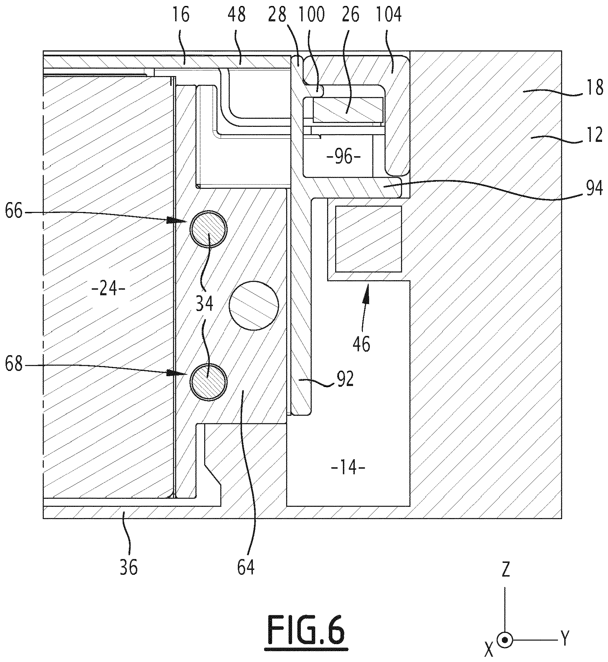

Comme visible sur les figures 4 et 6, les traverses 16 comprennent par exemple une première partie 48 s'étendant perpendiculairement à la direction longitudinale X. Dans l'exemple, toutes les traverses 16 comprennent en outre une deuxième partie 50 fixée sur la première partie du côté opposé au fond 36.

La première partie 48 des traverses 16 non extrémales est située longitudinalement entre deux des ensembles 22. La première partie 48 de toutes les traverses 16 présente avantageusement une épaisseur 48 de matière dans la direction longitudinale X inférieure à 20 mm, de préférence inférieure à 10 mm. Ainsi, deux ensembles 22 consécutifs longitudinalement sont séparés de moins de 20 mm, avantageusement de moins de 10 mm.

La deuxième partie 50 s'étend par exemple perpendiculairement à la troisième direction Z. La deuxième partie 50 est par exemple venue de matière avec la première partie 48.

La deuxième partie 50 des traverses 16 non extrémales bute sur deux des ensembles 22 selon la troisième direction Z par l'intermédiaire de deux couches 52 de matériau souple, par exemple une mousse.

En variante, la deuxième partie 50 bute directement sur les ensembles 22.

La deuxième partie 50 des traverses 16 extrémales bute sur un seul des ensembles 22, par l'intermédiaire d'une couche 54 de matériau souple, ou en variante directement.

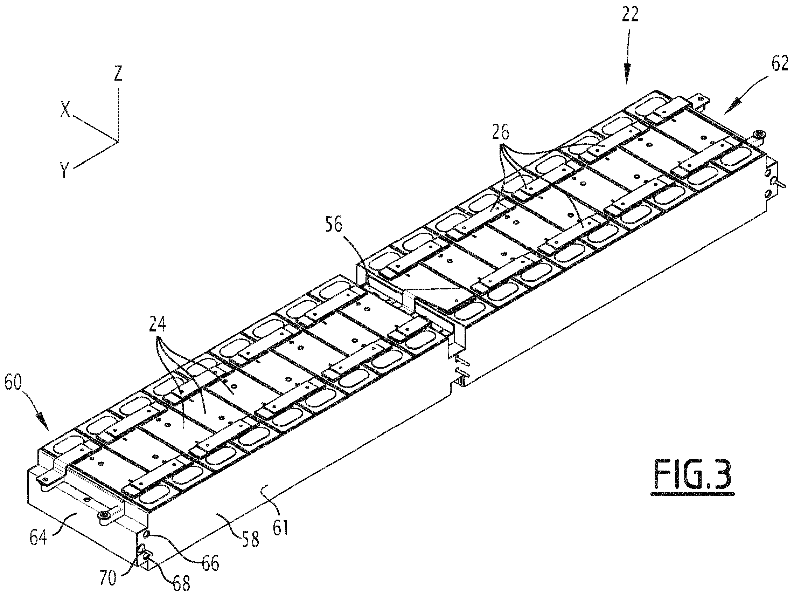

Dans l'exemple, chacun des ensembles 22 comprend une plaque centrale 56 (figures 2 et 3) s'étendant perpendiculairement à la direction transversale Y, les cellules électrochimiques 24 étant situées transversalement de part et d'autre de la plaque centrale.

Chacun des ensembles 22 comprend par exemple deux plaques latérales 58, 60 (figure 3) s'étendant perpendiculairement à la direction longitudinale X et situées de part et d'autre des cellules électrochimiques 24 longitudinalement, et au moins deux couches de colle 61 ou deux couches d'un matériau souple (non représentées) situées longitudinalement entre les cellules électrochimiques 24 et les deux plaques latérales 58, 60 respectivement.

Chacun des ensembles 22 comprend par exemple deux plaques extrémales 62, 64 s'étendant perpendiculairement à la direction transversale Y, de part et d'autre des cellules électrochimiques 24 transversalement.

Les plaques centrales 56 sont avantageusement adaptées pour résister à des efforts longitudinaux qui leur seraient appliqués par les traverses 16, et contribuent donc à réduire le risque de flambement des traverses en cas de choc latéral sur le véhicule.

Chacune des deux plaques extrémales 62, 64 définit avantageusement deux logements 66, 68 longitudinaux traversants.

Les tirants 34 s'étendent dans les logements 66, 68 définis par les plaques extrémales 62, 64, et passent par des orifices 78, 80 définis par les extrémités transversales 30, 32 des traverses 16. Dans l'exemple, les tirants 34 traversent aussi les deux plaques latérales 58, 60 de chacun des ensembles 22.

Les cornières 28 sont adaptées pour transmettre des efforts transversaux entre les traverses 16 et le boîtier 12.

Les extrémités transversales 30, 32 de chacune des traverses sont opposées l'une à l'autre transversalement. Les extrémités transversales 30 sont toutes situés transversalement d'un même côté par rapport aux extrémités transversales 32.

Dans l'exemple, les cornières 28 sont fixées sur les deux extrémités transversales 30, 32 de chacune des traverses 16.

Selon des variantes non représentées, les cornières 28 ne sont fixées que sur l'extrémité transversale 30 de chacune des traverses 16, ou même de seulement certaines des traverses 16.

Dans l'exemple, certaines des cornières 28 comprennent une première partie 92 s'étendant perpendiculairement à la direction transversale Y et fixée, par exemple soudée, sur l'extrémité transversale 30 des traverses 16, et une deuxième partie 94 s'étendant transversalement à partir de la première partie 92 et étant fixée sur le premier bord latéral 18. Les ensembles 22, la première partie 92 de ces cornières 28, et le premier bord latéral 18 définissent au moins partiellement un premier logement 96 s'étendant longitudinalement et par exemple destiné à abriter un ou plusieurs des connecteurs électriques 26 de la batterie.

Dans les autres cornières 28, la première partie 92 s'étendant perpendiculairement à la direction transversale Y et est fixée, par exemple soudée, sur l'extrémité transversale 32 des traverses 16. Pour ces autres cornières 28, la deuxième partie 94 s'étend transversalement à partir de la première partie 92 et est fixée sur le deuxième bord latéral 20. Les ensembles 22, la première partie 92 de ces autres cornières 28, et le deuxième bord latéral 20 définissent au moins partiellement un deuxième logement 98 s'étendant longitudinalement et adapté pour abriter un ou plusieurs des connecteurs électriques 26 de la batterie 10, notamment des barres de connexion connectant certains des ensembles 22 entre eux.

Les cornières 28 comprennent avantageusement une troisième partie 100 s'étendant transversalement à partir la première partie 92 du même côté que la deuxième partie 94, la troisième partie 100 étant situé de l'autre côté de la deuxième partie par rapport au fond 36 selon la troisième direction Z.

La deuxième partie 94 définit au moins un orifice de fixation 102 adapté pour recevoir une vis (non représentée) de la batterie 10, la deuxième partie 92 étant en contact plan avec, et fixée par la vis sur le rail 44, 46 longitudinal du boîtier 12.

Avantageusement, la batterie 10 comprenant en outre au moins un capot 104 (figure 6) s'étendant selon la direction longitudinale X et disposé transversalement entre le premier bord latéral 18 et la première partie 92 d'au moins certaines des cornières 28.

Le capot 104 délimite au moins partiellement le premier logement 96. Le capot 104 est situé de l'autre côté de la deuxième partie 94 de chacune de ces cornières 28 par rapport au fond 36 selon la troisième direction Z.

Avantageusement, la batterie 10 comprend un deuxième capot (non représenté) analogue au capot 104. Ce deuxième capot s'étend selon la direction longitudinale X et est disposé transversalement entre le deuxième bord latéral 20 et la première partie 92 des autres cornières 28.

Le capot 104 présente une section perpendiculairement à la direction longitudinale X par exemple en forme de « L ».

Le capot 104 bute par exemple sur la deuxième partie 92 et la troisième partie 100 selon la troisième direction Z.

Dans l'exemple, au moins les cornières 28 et les plaques extrémales 62, 64 sont vissées sur le boîtier 12.

On va maintenant décrire un premier procédé d'assemblage de la batterie 10.

Le premier procédé comprend une étape d'agencement des traverses 16 et des ensembles 22 dans une direction longitudinale de montage X' pour obtenir un système agencé 86, et une étape de fixation sur le boîtier des traverses 16 et/ou des ensembles 22 pour obtenir un système fixé 88.

Dans le système agencé 86, les traverses 16 s'étendent dans une direction transversale de montage Y' perpendiculaire à la direction de serrage X'. Les cellules électrochimiques 24 de chacun des ensembles 22 s'étendent successivement dans la direction transversale de montage Y'. Les traverses 16 et les ensembles 22 sont situés successivement dans la direction de serrage X', par exemple de manière alternée.

Avantageusement, l'agencement des traverses 16 et des ensembles 22 comprend un serrage des traverses 16 et des ensembles 22 les uns contre les autres dans la direction longitudinale de montage X'.

Le système fixé 88 est situé dans le logement 14 et orienté par rapport au boîtier 12 de sorte que la direction de serrage X' soit parallèle à la direction longitudinale X définie par la batterie 10 à l'état assemblé, et que la direction transversale de montage Y' soit parallèle à la direction transversale Y définie par la batterie 10 à l'état assemblé. Les traverses 16 du système fixé 88 s'étendant entre le premier bord latéral 18 et le deuxième bord latéral 20 du boîtier 12. La deuxième partie 94 de certaines des cornières 28 est fixée sur le premier bord latéral 18 du boîtier 12, et la deuxième partie 94 des autres cornières 28 est fixée sur le deuxième bord latéral 20.

Dans le premier procédé, l'agencement des traverses 16 et des ensembles 22 est avantageusement réalisé dans le logement 14. La direction longitudinale de montage X' est parallèle à la direction longitudinale X, et la direction la direction transversale de montage Y' est parallèle à la direction transversale Y dès l'étape d'agencement.

Avantageusement, les rails 44, 46 facilitent le positionnement et l'éventuel serrage des ensembles 22 et des traverses 16.

Les cornières 28 glissent avantageusement sur les rails 44, 46 avant la fixation.

Les plaques extrémales 62, 64 de chacun des ensembles 22, et les cornières 28 sont par exemple vissées sur le boîtier 12. Ainsi, les traverses 16 sont avantageusement fixées par l'intermédiaire des cornières 28.

Selon des modes de réalisation particuliers, d'autres éléments des ensembles 22, ou des parties des traverses 16 sont fixés sur le boîtier 12.

On va maintenant décrire un deuxième procédé d'assemblage de la batterie 10. Le deuxième procédé est analogue au premier procédé, et comprend une étape d'agencement et une étape de fixation. Seules les différences seront décrites en détail ci-après.

Dans le deuxième procédé, l'étape d'agencement n'a pas lieu dans le logement 14, mais hors de celui-ci. L'agencement, avec serrage éventuel, est par exemple complètement réalisé avant la fixation.

A l'étape d'agencement, la direction longitudinale de montage X' et la direction transversale de montage Y' ne sont donc pas nécessairement parallèles respectivement à la direction longitudinale X et à la direction transversale Y, qui seront définies plus tard par la batterie 10 à l'état assemblé dans le logement 14. Dit de manière plus simple, le système agencé 86 ne se situe pas dans le logement 14 et peut donc présenter une orientation quelconque par rapport au boîtier 12.

Le système agencé 86 comprend avantageusement les tirants 34, qui s'étendent dans la direction longitudinale de montage X', et des organes de serrage 90.

Pour réaliser l'agencement, les traverses 16 et les ensembles 22 sont par exemple enfilés sur les tirants 34.

Pour réaliser l'éventuel serrage, les organes de serrage 90 sont disposés sur les tirants 34 pour comprimer les ensembles 22 et les traverses 16 dans la direction longitudinale de montage X'. Par exemple, les organes de serrage 90 sont vissés sur une extrémité de chacun des tirants 34.

Pour réaliser la fixation sur le boîtier 12, le système agencé 86 est déplacé en bloc dans le logement 14. Puis, le système agencé 86 est fixé sur le boîtier 12, par exemple à l'aide de vis.

Le deuxième procédé présente l'avantage que l'étape d'agencement, avec serrage éventuel, est réalisée sans être gênée ou contrainte par la présence du boîtier 12. Dans l'exemple, elle requiert des tirants 34, qui sont des pièces supplémentaires, mais facilitant l'agencement, et garantissant un très bon serrage, bien homogène transversalement.

Grâce aux caractéristiques décrites ci-dessus, la batterie 10 présente une meilleure densité énergétique, tout en résistant suffisamment aux choc latéraux éventuellement subis par le véhicule.

En effet, le premier logement 96 défini par le boîtier 12, les ensembles 22, les cornières 28 et l'éventuel capot 104 permet par exemple de faire passer certains des connecteurs électriques 26 non pas au-dessus des ensembles 22 (du côté opposé au fond 36 du boîtier 12), mais à côté, avec une perte de volume de stockage d'énergie beaucoup plus faible. Il en va de même pour l'éventuel deuxième logement 98.

En outre, les cornières 28 permettent une bonne transmission des efforts transversaux entre les traverses 16 et le boîtier 12, et facilitent la fixation des traverses 16 sur le boîtier 12.

De plus, selon un mode de réalisation préféré, les ensembles 22 ne sont pas insérés dans des compartiments définis par les traverses 16 fixées préalablement sur le boîtier 12. Les traverses 16 et les ensembles 22 peuvent alors être serrés les uns contre les autres sans jeu. Que le serrage ait lieu dans le boîtier 12 (premier procédé) ou hors du boîtier 12 (deuxième procédé), la fixation des traverses 16 n'empêche pas ce bon serrage. Il en résulte que la distance entre deux ensembles 22 consécutifs longitudinalement est réduite. La densité énergétique de la batterie 10 s'en trouve augmentée.

En outre, du fait du serrage, les ensembles 22 limitent la possibilité que les traverses 16 subissent un flambement en cas de choc latéral, en empêchant que les traverses 16 se courbent un plan perpendiculaire à la troisième direction Z. Ainsi, il est possible de mettre œuvre des traverses 16 dont la première partie 48, située entre deux ensembles 22 consécutifs, est plus mince, toutes choses égales par ailleurs. Ceci permet à nouveau d'augmenter la densité énergétique.

Les éventuelles plaques centrales 56 des ensembles 22 renforcent avantageusement cet effet.

## Revendications

1. Batterie (10) pour véhicule électrique ou hybride, la batterie (10) comprenant :
- un boîtier (12) définissant un logement (14) s'étendant dans une direction longitudinale (X) et dans une direction transversale (Y) perpendiculaire à la direction longitudinale (X), le boîtier (12) comprenant un premier bord latéral (18) et un deuxième bord latéral (20) opposés l'un à l'autre transversalement,
- une pluralité de traverses (16) s'étendant dans la direction transversale (Y), chacune des traverses (16) comprenant deux extrémités transversales (30, 32) opposées l'une à l'autre,
- une pluralité d'ensembles (22), chacun des ensembles (22) comportant des cellules électrochimiques (24) s'étendant successivement dans la direction transversale (Y) et solidarisées entre elles, les traverses (16) et les ensembles (22) étant disposés successivement dans le logement (14) dans la direction longitudinale (X), et
- une pluralité de cornières (28) adaptées pour transmettre des efforts transversaux entre les traverses (16) et le boîtier (12), au moins certaines des cornières (28) comprenant une première partie (92) s'étendant perpendiculairement à la direction transversale (Y) et fixée sur l'une des extrémités transversales (30, 32) d'au moins certaines des traverses (16), et une deuxième partie (94) s'étendant transversalement à partir la première partie (92) et étant fixée sur le premier bord latéral (18), les ensembles (22), la première partie (92), et le premier bord latéral (18) définissant au moins partiellement un premier logement (96) s'étendant longitudinalement.

2. Batterie (10) selon la revendication 1, dans laquelle au moins certaines des cornières (28) comprennent une première partie (92) s'étendant perpendiculairement à la direction transversale (Y) et fixée sur l'autre des extrémités transversales (30, 32) d'au moins certaines des traverses (16), et une deuxième partie (94) s'étendant transversalement à partir la première partie (92) et étant fixée sur le deuxième bord latéral (20), les ensembles (22), la première partie (92), et le deuxième bord latéral (20) définissant au moins partiellement un deuxième logement (98) s'étendant longitudinalement et adapté pour abriter un ou plusieurs connecteurs électriques (26) de la batterie (10).

3. Batterie (10) selon la revendication 1 ou 2, dans laquelle la deuxième partie (94) définit au moins un orifice de fixation (102) adapté pour recevoir une vis de la batterie (10), la deuxième partie (94) étant en contact plan avec, et fixée par la vis sur un épaulement ou un rail longitudinal du boîtier (12).

4. Batterie (10) selon l'une quelconque des revendications 1 à 3, dans laquelle le boîtier (12) comprend un fond (36), la batterie (10) comprenant en outre au moins un capot (104) s'étendant selon la direction longitudinale (X) et disposé transversalement entre le premier bord latéral (18) et la première partie (92) d'au moins certaines des cornières (28), le capot (104) délimitant au moins partiellement le premier logement (96), le capot (104) étant situé de l'autre côté de la deuxième partie (94) de chacune desdites certaines des cornières (28) par rapport au fond (36) selon une troisième direction (Z) perpendiculaire à la direction longitudinale (X) et la direction transversale (Y).

5. Batterie (10) selon la revendication 4, dans laquelle dans laquelle le capot (104) présente une section perpendiculairement à la direction longitudinale (X) en forme de « L ».

6. Batterie (10) selon la revendication 4 ou 5, dans laquelle les cornières (28) comprennent une troisième partie (100) s'étendant transversalement à partir la première partie (92) du même côté que la deuxième partie (94), la troisième partie (100) étant situé de l'autre côté de la deuxième partie (94) par rapport au fond (36) selon la troisième direction (Z), le capot (104) butant sur la deuxième partie (94) et la troisième partie (100) selon la troisième direction (Z).

7. Batterie (10) selon l'une quelconque des revendications 1 à 6, dans laquelle les traverses (16) et les ensembles (22) sont disposés dans la direction longitudinale (X) les uns contre les autres, de sorte qu'il n'existe pas de jeu mécanique entre les traverses (16) et les ensembles (22).

8. Batterie (10) selon l'une quelconque des revendication 1 à 7, dans laquelle au moins certaines des traverses (16) présentent, perpendiculairement à la direction transversale (Y), une section en « T » ou en « H ».

9. Batterie (10) selon l'une quelconque des revendication 1 à 8, dans laquelle chacun des ensembles (22) comprend en outre :
- deux plaques latérales (58, 60) s'étendant perpendiculairement à la direction longitudinale (X) et situées de part et d'autre des cellules électrochimiques (24) longitudinalement, et
- au moins deux couches de colle (61) ou deux couches d'un matériau souple situées longitudinalement entre les cellules électrochimiques (24) et les deux plaques latérales (58, 60) respectivement.

10. Batterie (10) selon l'une quelconque des revendication 1 à 9, dans laquelle chacun des ensembles (22) comprend en outre deux plaques extrémales (62, 64) s'étendant perpendiculairement à la direction transversale (Y) de part et d'autre des cellules électrochimiques (24) transversalement, l'une des deux plaques extrémales (62, 64) de chacun des ensembles (22) se situant transversalement de l'autre côté de la première partie (92) d'une des cornières (28) par rapport au premier bord latéral (18) du boîtier (12).

11. Procédé d'assemblage d'une batterie (10) telle que décrite par l'une quelconque des revendication 1 à 10, comprenant :
- un agencement des traverses (16) et des ensembles (22) dans une direction longitudinale de montage (X') pour obtenir un système agencé (86) dans lequel les traverses (16) s'étendent dans une direction transversale de montage (Y') perpendiculaire à la direction longitudinale de montage (X'), les cellules électrochimiques (24) de chacun des ensembles (22) s'étendant successivement dans la direction transversale de montage (Y'), les traverses (16) et les ensembles (22) étant disposés successivement dans la direction de serrage (X'), et
- une fixation sur le boîtier (12) des traverses (16) et/ou des ensembles (22) pour obtenir un système fixé (88), le système fixé (88) étant situé dans le logement (14) et orienté par rapport au boîtier (12) de sorte que la direction longitudinale de montage (X') soit parallèle à la direction longitudinale (X) définie par la batterie (10) à l'état assemblé, et que la direction transversale de montage (Y') soit parallèle à la direction transversale (Y) définie par la batterie (10) à l'état assemblé, la deuxième partie (94) d'au moins certaines des cornières (28) étant fixée sur le premier bord latéral (18) du boîtier (12).

12. Procédé selon la revendication 11, dans lequel l'agencement des traverses (16) et des ensembles (22) dans la direction longitudinale de montage (X') comprend un serrage des traverses (16) et des ensembles (22) les uns contre les autres dans la direction longitudinale de montage (X').

13. Procédé selon la revendication 12, dans lequel le serrage des traverses (16) et des ensembles (22) les uns contre les autres est réalisé dans le logement (14), la direction longitudinale de montage (X') étant parallèle à la direction longitudinale (X) et la direction transversale de montage (Y') étant parallèle à la direction transversale (Y) pendant le serrage.

14. Procédé selon la revendication 12, dans lequel :
- le serrage des traverses (16) et des ensembles (22) les uns contre les autres est réalisé hors du logement (14), le système serré comprenant des tirants (34) s'étendant dans la direction longitudinale de montage (X') et des organes de serrage (90), les traverses (16) et les ensembles (22) étant enfilés sur les tirants (34), et les organes de serrage (90) étant disposés sur les tirants (34) pour comprimer les ensembles (22) et les traverses (16) dans la direction longitudinale de montage (X'), et
- la fixation sur le boîtier (12) du système serré comprend un déplacement en bloc du système serré dans le logement (14).

## Revendications modifiées

### Revendications modifiées conformément à la règle 137(2) CBE.

1. Batterie (10) pour véhicule électrique ou hybride, la batterie (10) comprenant :
- un boîtier (12) définissant un logement (14) s'étendant dans une direction longitudinale (X) et dans une direction transversale (Y) perpendiculaire à la direction longitudinale (X), le boîtier (12) comprenant un premier bord latéral (18) et un deuxième bord latéral (20) opposés l'un à l'autre transversalement,
- une pluralité de traverses (16) s'étendant dans la direction transversale (Y), chacune des traverses (16) comprenant deux extrémités transversales (30, 32) opposées l'une à l'autre,
- une pluralité d'ensembles (22), chacun des ensembles (22) comportant des cellules électrochimiques (24) s'étendant successivement dans la direction transversale (Y) et solidarisées entre elles, les traverses (16) et les ensembles (22) étant disposés successivement dans le logement (14) dans la direction longitudinale (X), et
- une pluralité de cornières (28) adaptées pour transmettre des efforts transversaux entre les traverses (16) et le boîtier (12), au moins certaines des cornières (28) comprenant une première partie (92) s'étendant perpendiculairement à la direction transversale (Y) et fixée sur l'une des extrémités transversales (30, 32) d'au moins certaines des traverses (16), et une deuxième partie (94) s'étendant transversalement à partir de la première partie (92) et étant fixée sur le premier bord latéral (18), les ensembles (22), la première partie (92), et le premier bord latéral (18) définissant au moins partiellement un premier logement (96) s'étendant longitudinalement.

2. Batterie (10) selon la revendication 1, dans laquelle au moins certaines des cornières (28) comprennent une première partie (92) s'étendant perpendiculairement à la direction transversale (Y) et fixée sur l'autre des extrémités transversales (30, 32) d'au moins certaines des traverses (16), et une deuxième partie (94) s'étendant transversalement à partir la première partie (92) et étant fixée sur le deuxième bord latéral (20), les ensembles (22), la première partie (92), et le deuxième bord latéral (20) définissant au moins partiellement un deuxième logement (98) s'étendant longitudinalement et adapté pour abriter un ou plusieurs connecteurs électriques (26) de la batterie (10).

3. Batterie (10) selon la revendication 1 ou 2, dans laquelle la deuxième partie (94) définit au moins un orifice de fixation (102) adapté pour recevoir une vis de la batterie (10), la deuxième partie (94) étant en contact plan avec, et fixée par la vis sur un épaulement ou un rail longitudinal du boîtier (12).

4. Batterie (10) selon l'une quelconque des revendications 1 à 3, dans laquelle le boîtier (12) comprend un fond (36), la batterie (10) comprenant en outre au moins un capot (104) s'étendant selon la direction longitudinale (X) et disposé transversalement entre le premier bord latéral (18) et la première partie (92) d'au moins certaines des cornières (28), le capot (104) délimitant au moins partiellement le premier logement (96), le capot (104) étant situé de l'autre côté de la deuxième partie (94) de chacune desdites certaines des cornières (28) par rapport au fond (36) selon une troisième direction (Z) perpendiculaire à la direction longitudinale (X) et la direction transversale (Y).

5. Batterie (10) selon la revendication 4, dans laquelle dans laquelle le capot (104) présente une section perpendiculairement à la direction longitudinale (X) en forme de « L ».

6. Batterie (10) selon la revendication 4 ou 5, dans laquelle les cornières (28) comprennent une troisième partie (100) s'étendant transversalement à partir la première partie (92) du même côté que la deuxième partie (94), la troisième partie (100) étant situé de l'autre côté de la deuxième partie (94) par rapport au fond (36) selon la troisième direction (Z), le capot (104) butant sur la deuxième partie (94) et la troisième partie (100) selon la troisième direction (Z).

7. Batterie (10) selon l'une quelconque des revendications 1 à 6, dans laquelle les traverses (16) et les ensembles (22) sont disposés dans la direction longitudinale (X) les uns contre les autres, de sorte qu'il n'existe pas de jeu mécanique entre les traverses (16) et les ensembles (22).

8. Batterie (10) selon l'une quelconque des revendication 1 à 7, dans laquelle au moins certaines des traverses (16) présentent, perpendiculairement à la direction transversale (Y), une section en « T » ou en « H ».

9. Batterie (10) selon l'une quelconque des revendication 1 à 8, dans laquelle chacun des ensembles (22) comprend en outre :
- deux plaques latérales (58, 60) s'étendant perpendiculairement à la direction longitudinale (X) et situées de part et d'autre des cellules électrochimiques (24) longitudinalement, et
- au moins deux couches de colle (61) ou deux couches d'un matériau souple situées longitudinalement entre les cellules électrochimiques (24) et les deux plaques latérales (58, 60) respectivement.

10. Batterie (10) selon l'une quelconque des revendication 1 à 9, dans laquelle chacun des ensembles (22) comprend en outre deux plaques extrémales (62, 64) s'étendant perpendiculairement à la direction transversale (Y) de part et d'autre des cellules électrochimiques (24) transversalement, l'une des deux plaques extrémales (62, 64) de chacun des ensembles (22) se situant transversalement de l'autre côté de la première partie (92) d'une des cornières (28) par rapport au premier bord latéral (18) du boîtier (12).

11. Procédé d'assemblage d'une batterie (10) telle que décrite par l'une quelconque des revendication 1 à 10, comprenant :
- un agencement des traverses (16) et des ensembles (22) dans une direction longitudinale de montage (X') pour obtenir un système agencé (86) dans lequel les traverses (16) s'étendent dans une direction transversale de montage (Y') perpendiculaire à la direction longitudinale de montage (X'), les cellules électrochimiques (24) de chacun des ensembles (22) s'étendant successivement dans la direction transversale de montage (Y'), les traverses (16) et les ensembles (22) étant disposés successivement dans la direction de serrage (X'), et
- une fixation sur le boîtier (12) des traverses (16) et/ou des ensembles (22) pour obtenir un système fixé (88), le système fixé (88) étant situé dans le logement (14) et orienté par rapport au boîtier (12) de sorte que la direction longitudinale de montage (X') soit parallèle à la direction longitudinale (X) définie par la batterie (10) à l'état assemblé, et que la direction transversale de montage (Y') soit parallèle à la direction transversale (Y) définie par la batterie (10) à l'état assemblé, la deuxième partie (94) d'au moins certaines des cornières (28) étant fixée sur le premier bord latéral (18) du boîtier (12).

12. Procédé selon la revendication 11, dans lequel l'agencement des traverses (16) et des ensembles (22) dans la direction longitudinale de montage (X') comprend un serrage des traverses (16) et des ensembles (22) les uns contre les autres dans la direction longitudinale de montage (X').

13. Procédé selon la revendication 12, dans lequel le serrage des traverses (16) et des ensembles (22) les uns contre les autres est réalisé dans le logement (14), la direction longitudinale de montage (X') étant parallèle à la direction longitudinale (X) et la direction transversale de montage (Y') étant parallèle à la direction transversale (Y) pendant le serrage.

14. Procédé selon la revendication 12, dans lequel :
- le serrage des traverses (16) et des ensembles (22) les uns contre les autres est réalisé hors du logement (14), le système serré comprenant des tirants (34) s'étendant dans la direction longitudinale de montage (X') et des organes de serrage (90), les traverses (16) et les ensembles (22) étant enfilés sur les tirants (34), et les organes de serrage (90) étant disposés sur les tirants (34) pour comprimer les ensembles (22) et les traverses (16) dans la direction longitudinale de montage (X'), et
- la fixation sur le boîtier (12) du système serré comprend un déplacement en bloc du système serré dans le logement (14).
